# FASCICULE DE BREVET EUROPEEN

(11) **EP 4 048 913 B1**
(45) Date de publication et mention de la délivrance du brevet: **23.07.2025**
(21) Numéro de dépôt: 20790331.1
(22) Date de dépôt: 20.10.2020
(51) Int. Cl.: F16D 23/12, F16C 1/10

(54) **DISPOSITIF D'AMORTISSEMENT DES VIBRATIONS SUR UNE FOURCHETTE DE DEBRAYAGE**
VORRICHTUNG ZUR DÄMPFUNG VON SCHWINGUNGEN AN EINER KUPPLUNGSGABEL
VIBRATION DAMPING DEVICE ON A RELEASE FORK

(30) Priorité: 25.10.2019 FR 1911987
(43) Date de publication de la demande: 31.08.2022
(73) Titulaire: NEW H POWERTRAIN HOLDING, S.L.U., 47008 Valladolid (ES)
(72) Inventeur: CARON, Felipe, 78084 GUYANCOURT (FR); FILARD, Joao-Batista-Carvalho, 78084 GUYANCOURT (FR); TOSO, Larissa, 78084 GUYANCOURT (FR)
(74) Mandataire: Elzaburu S.L.P.
(86) Numéro de dépôt international: PCT/EP2020/079519
(87) Numéro de publication internationale: WO 2021/078751

(56) Documents cités:
- EP-A1- 2 942 225
- EP-A1- 2 942 225
- WO-A1-2019/087913
- WO-A1-2019/087913
- FR-A1- 2 844 017
- FR-A1- 3 075 896
- FR-A1- 3 075 896
- US-A- 5 570 611
- US-A- 5 570 611

## Description

La présente invention se rapporte à la commande des embrayages par câble, dans les véhicules automobiles.

Plus précisément, elle a pour objet un dispositif d'amortissement des vibrations sur une fourchette de débrayage, au niveau d'une fente d'introduction et d'une zone de retenue de l'extrémité du câble de débrayage sur celle-ci.

Dans les boîtes de vitesses manuelles, ou robotisées, à arbres parallèles comportant un embrayage d'entrée à commande par câble, le mécanisme d'embrayage est muni généralement d'une fourchette de commande pivotante. Le câble de commande est relié par une extrémité à un actionneur ou à une pédale de débrayage. Par son autre extrémité, il est accroché à la fourchette, de manière à la tirer l'écart de sa position de repos, lorsque le conducteur presse sur sa pédale de débrayage.

Les commandes d'embrayage par câble transmettent à l'habitacle, des bruits et des vibrations, par l'intermédiaire de la fourchette et du câble, en particulier lors des changements de rapport de boîte à haut régime moteur.

Pour filtrer ces vibrations, il a été proposé d'introduire dans la commande des dispositifs d'amortissement, par exemple entre une pièce d'appui de l'extrémité du câble sur la fourchette et celle-ci.

Par la publication FR 3032 504, on connaît un dispositif d'embrayage pour véhicule automobile comprenant un câble d'embrayage, une pièce d'appui sur la fourchette, une tige reliée au câble traversant la pièce d'appui et une pièce d'arrêt exerçant sa poussée sur la fourchette par l'intermédiaire de la pièce d'appui, lorsque le câble est tiré. Ce système comporte aussi un tampon élastomère, disposé entre la pièce d'arrêt et la pièce d'appui, pour filtrer les vibrations transmises à la commande par la fourchette. Il faut malgré tout ajouter trois rondelles à ce dispositif, pour garantir sa prestation dynamique.

On dispose par ailleurs d'une solution plus robuste, consistant à découper dans la tête de la fourchette une fente, où l'opérateur vient glisser le câble, dont l'extrémité est retenue derrière la fourchette par une tête plus large que la fente.

La filtration des vibrations transmises au câble par la fourchette, peut être recherchée de diverses manières, plus ou moins efficaces, ou aisées à mettre en œuvre. Par exemple en enfilant sur le câble une ou plusieurs bagues amortissantes, qui viennent se plaquer contre la fourchette, lorsque le câble tire sur celle-ci.

Toutefois, les bagues d'appui utilisées actuellement, dont les dimensions et la rigidité sont parfaitement adaptées à des conditions d'utilisation prévisibles peuvent à l'usage perdre en efficacité dans l'amortissement de certaines vibrations, par exemple aux régimes moteur les plus élevés.

La présente invention vise à réduire les vibrations et les bruits remontant par la commande d'embrayage, au moyen d'un dispositif d'amortissement pérenne, particulièrement adapté à l'accrochage du câble sur la fourchette.

Le dispositif d'amortissement proposé, est constitué d'un manchon engagé sur la fourchette au niveau de sa fente d'introduction et de sa zone de retenue, en épousant la forme de la fourchette.

Dans un mode de réalisation particulier, le dispositif d'amortissement présente un évidement intérieur, par lequel il est engagé sur l'extrémité de la fourchette.

Selon une autre caractéristique, le dispositif proposé présente une fente d'introduction du câble, épousant celle de la fourchette.

De préférence, le manchon est en matériau élastomère.

La présente invention sera mieux comprise à la lecture de la description suivante d'un mode de réalisation non limitatif de celle-ci, en se reportant aux dessins annexés, sur lesquels :
[Fig. 1A] est une vue de face d'une fourchette de débrayage.
[Fig.1B] est une vue de profil d'une fourchette de débrayage.
[Fig.2A] est une vue de l'extrémité de la fourchette, avec le dispositif d'amortissement.
[Fig.2B] est aussi est aussi une vue de l'extrémité de la fourchette, avec le dispositif d'amortissement.
[Fig.3A] est une vue de face du dispositif d'amortissement proposé.
[Fig.3B] est une section selon A-A du dispositif d'amortissement proposé.
[Fig.3C] est une vue de dessous du dispositif d'amortissement proposé.
[Fig.3D] est une section selon B-B du dispositif d'amortissement proposé.

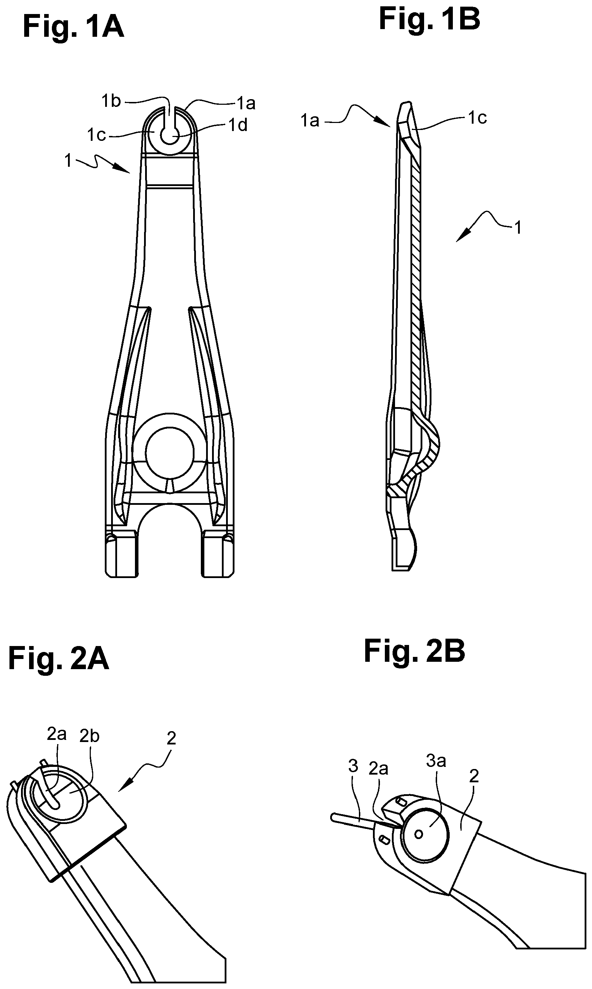

La tête de fourchette de débrayage la des figures 1A et 1B a un profil incurvé. Elle forme une cuvette de retenue 1c, pour l'extrémité d'un câble de débrayage (non représenté), et présente une fente de passage 1b pour l'introduction du câble. La fente 1b débouche dans un orifice circulaire 1d, ménagé au centre de la cuvette 1c.

Sur les figures 2A, et 2B, l'extrémité supérieure la de la fourchette est recouverte du dispositif d'amortissement 2. Ce dispositif amortit les vibrations sur la fourchette de débrayage 1, au niveau de la fente d'introduction 1b et de la zone de retenue 1c de l'extrémité du câble de débrayage 3. Le dispositif d'amortissement épouse la forme de la fourchette, et présente une fente d'introduction 2a du câble 3, épousant la fente 1b de la tête de fourchette la. Sur une face, le dispositif d'amortissement 2 forme également une cuvette de retenue 2b, en appui sur celle de la fourchette. Le câble de débrayage 3 est représenté sur la figure 2B avec sa tête 3a, retenue sur la cuvette 2b.

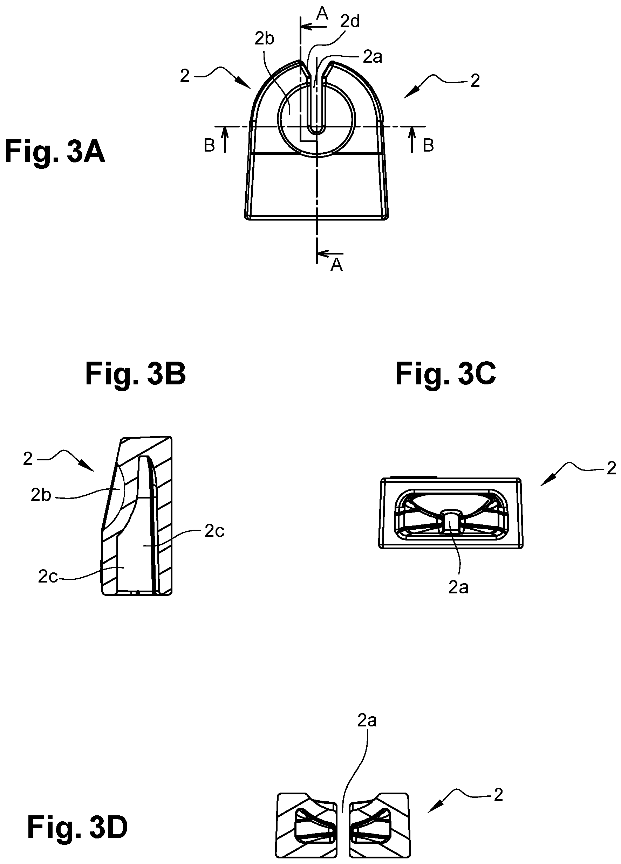

Le dispositif d'amortissement 2, est constitué d'un manchon, de préférence en matériau élastomère, qui est engagé sur la fourchette au niveau de sa fente d'introduction 1b et de sa zone de retenue 1c, en épousant la forme de la fourchette. Il se retrouve sur les figures 3A à 3D. La figure 3A met en évidence la forme générale du dispositif. Il présente une fente d'introduction du câble 2a, épousant celle de la fourchette, qui s'étend jusqu'au centre de la cuvette 2, et un évidement intérieur 2c, par lequel il est engagé sur l'extrémité la de la fourchette. Son col 2d, coupé en biseau, facilite l'introduction du câble 3 dans la fente 2a.

La cuvette de retenue 2b de l'extrémité 3a du câble, épouse celle de la fourchette. La figure 3B montre son profil incurvé. Elle met en évidence la forme creuse du manchon, et l'évidement intérieur 2c lui permettant d'épouser l'extrémité supérieure la de la fourchette 1.

La section intérieure du manchon est plus étroite au niveau de la cuvette 2b du manchon 2, qu'en dessous de celle-ci. Les sections 3C et 3D traduisent le rétrécissement du volume intérieur 2b du dispositif au niveau de sa cuvette 2b, qui est aussi visible sur la section 3B.

La proposition est donc d'engager sur l'extrémité supérieure de la fourchette la un dispositif d'amortissement, de préférence en matériau élastomère, par exemple du caoutchouc. Comme il épouse la forme de la fourchette, il ne risque pas de se dégager de celle-ci au cours de l'opération de montage, ni ultérieurement, en cours de fonctionnement. Une fois mis en place sur la fourchette, ne gêne pas l'opérateur lorsqu'il vient accrocher l'extrémité du câble de débrayage.

## Revendications

1. Fourchette de débrayage comprenant un dispositif d'amortissement des vibrations sur le fourchette de débrayage, le fourchette de débrayage présentant une fente d'introduction (1b) et une zone de retenue (1c) de l'extrémité d'un câble de débrayage (3) sur celle-ci, et un manchon d'amortissement (2) de vibrations sur la fourchette, **caractérisé en ce que** le manchon est engagé sur la fourchette au niveau de sa fente d'introduction (1b) et de sa zone de retenue (1c), en épousant la forme de la fourchette.

2. Fourchette de débrayage selon la revendication 1, **caractérisé en ce que** le dispositif d'amortissement présente un évidement intérieur (2c) , par lequel il est engagé sur l'extrémité (1a) de la fourchette.

3. Fourchette de débrayage selon la revendication 1 ou 2, **caractérisé en ce que** le dispositif d'amortissement présente une fente d'introduction du câble (2a), épousant celle de la fourchette.

4. Fourchette de débrayage selon la revendication 1, 2 ou 3, **caractérisé en ce que** le dispositif d'amortissement présente une cuvette de retenue (2b) de l'extrémité (3a) du câble, épousant celle de la fourchette.

5. Fourchette de débrayage selon la revendication 4, **caractérisé en ce que** sa fente d'introduction (2a) s'étend jusqu'au centre de la cuvette (2b).

6. Fourchette de débrayage selon la revendication 4 ou 5, **caractérisé en ce que** la section intérieure du manchon est plus étroite au niveau de la cuvette (2b) qu'en dessous de celle-ci.

7. Fourchette de débrayage selon l'une des revendications 3 à 6, **caractérisé en ce que** le col d'ouverture (2d) de la fente d'introduction (2a) du câble (3) est coupé en biseau pour faciliter son introduction.

8. Fourchette de débrayage selon l'une des revendications précédentes, **caractérisé en ce que** le dispositif d'amortissement est en matériau élastomère.

## Patentansprüche

1. Ausrückgabel, umfassend eine Vorrichtung zur Dämpfung von Schwingungen an der Ausrückgabel, wobei die Ausrückgabel einen Einführschlitz (1b) und einen Haltebereich (1c) für das Ende eines Ausrückseils (3) daran aufweist, und eine Schwingungsdämpfungshülse (2) auf der Gabel, **dadurch gekennzeichnet, dass** die Hülse an ihrem Einführschlitz (1b) und ihrem Haltebereich (1c) mit der Gabel in Eingriff steht, wobei sie sich der Form der Gabel anpasst.

2. Ausrückgabel nach Anspruch 1, **dadurch gekennzeichnet, dass** die Vorrichtung zur Dämpfung eine innere Aussparung (2c) aufweist, durch die sie mit dem Ende (1a) der Gabel in Eingriff steht.

3. Ausrückgabel nach Anspruch 1 oder 2, **dadurch gekennzeichnet, dass** die Vorrichtung zur Dämpfung einen Seileinführschlitz (2a) aufweist, der sich an den Schlitz der Gabel anpasst.

4. Ausrückgabel nach Anspruch 1, 2 oder 3, **dadurch gekennzeichnet, dass** die Vorrichtung zur Dämpfung eine Rückhaltemulde (2b) für das Ende (3a) des Seils aufweist, die sich an die der Gabel anpasst.

5. Ausrückgabel nach Anspruch 4, **dadurch gekennzeichnet, dass** sich ihr Einführschlitz (2a) bis zur Mitte der Mulde (2b) erstreckt.

6. Ausrückgabel nach Anspruch 4 oder 5, **dadurch gekennzeichnet, dass** der innere Abschnitt der Hülse an der Mulde (2b) schmaler ist als darunter.

7. Ausrückgabel nach einem der Ansprüche 3 bis 6, **dadurch gekennzeichnet, dass** der Öffnungshals (2d) des Einführschlitzes (2a) für das Seil (3) schräg abgeschnitten ist, um sein Einführen zu erleichtern.

8. Ausrückgabel nach einem der vorhergehenden Ansprüche, **dadurch gekennzeichnet, dass** die Vorrichtung zur Dämpfung aus Elastomermaterial besteht.

## Claims

1. A clutch release fork comprising a vibration damping device on the clutch release fork, the clutch release fork having an insertion slot (1b) and a retaining zone (1c) for the end of a clutch release cable (3) thereon, and a vibration damping sleeve (2) on the fork, **characterised in that** the sleeve is engaged on the fork at its insertion slot (1b) and its retaining zone (1c), by snugly fitting the shape of the fork.

2. The clutch release fork according to claim 1, **characterised in that** the damping device has an internal recess (2c), through which it is engaged on the end (1a) of the fork.

3. The clutch release fork according to claim 1 or 2, **characterised in that** the damping device has a cable insertion slot (2a), snugly fitting that of the fork.

4. The clutch release fork according to claim 1, 2 or 3, **characterised in that** the damping device has a retaining cup (2b) for the end (3a) of the cable, snugly fitting that of the fork.

5. The clutch release fork according to claim 4, **characterised in that** its insertion slot (2a) extends to the centre of the cup (2b).

6. The clutch release fork according to claim 4 or 5, **characterised in that** the internal section of the sleeve is narrower at the cup (2b) than beneath it.

7. The clutch release fork according to one of claims 3 to 6, **characterised in that** the opening neck (2d) of the insertion slot (2a) of the cable (3) is bevel cut to facilitate the introduction thereof.

8. The clutch release fork according to one of the preceding claims, **characterised in that** the damping device is of an elastomeric material.
